(19) Europäisches Patentamt
European Patent Office
Office européen des brevets

(11) **EP 2 546 977 B1**

(12) **FASCICULE DE BREVET EUROPEEN**

(45) Date de publication et mention
de la délivrance du brevet:
**20.11.2013 Bulletin 2013/47**

(51) Int Cl.:
***H02P 21/00*** *(2006.01)*          ***H02P 29/02*** *(2006.01)*

(21) Numéro de dépôt: **12172122.9**

(22) Date de dépôt: **15.06.2012**

(54) **Procédé de commande mis en oeuvre dans un variateur de vitesse pour contrôler la décélération d'un moteur électrique en cas de coupure d'alimentation**

Regelungsverfahren in einem Antriebsumrichter zum Bremsen eines Elektromotors bei Netzausfall

Method of control implemented in a variable speed drive for controlling the deceleration of an electric motor in the case of power outage

| | |
|---|---|
| (84) Etats contractants désignés:<br>**AL AT BE BG CH CY CZ DE DK EE ES FI FR GB GR HR HU IE IS IT LI LT LU LV MC MK MT NL NO PL PT RO RS SE SI SK SM TR**<br><br>(30) Priorité: **12.07.2011 FR 1156347**<br><br>(43) Date de publication de la demande:<br>**16.01.2013 Bulletin 2013/03**<br><br>(73) Titulaire: **Schneider Toshiba Inverter Europe SAS 27120 Pacy sur Eure (FR)**<br><br>(72) Inventeurs:<br>• **Kermarrec, Ludovic**<br>  **27000 Evreux (FR)**<br>• **Malrait, François**<br>  **27120 Jouy sur Eure (FR)**<br><br>(74) Mandataire: **Bié, Nicolas et al Schneider Electric Industries SAS Service Propriété Industrielle 35 rue Joseph Monier - CS 30323 92506 Rueil-Malmaison Cedex (FR)** | (56) Documents cités:<br>• **Raj Narayanan, Don Platt, Sarath Perera: "IMPROVEMENTS TO VOLTAGE SAG RIDE-THROUGH PERFORMANCE OF AC VARIABLE SPEED DRIVES", AUPEC 99 - Australasian Universities Power Engineering Conference , 21 septembre 1999 (1999-09-21), XP002671315, Extrait de l'Internet: URL:http://itee.uq.edu.au/ ~aupec/aupec99/n arayanan99.pdf [extrait le 2012-03-09]**<br>• **HOLTZ J ET AL: "Controlled AC drives with ride-through capability at power interruption", INDUSTRY APPLICATIONS SOCIETY ANNUAL MEETING, 1993., CONFERENCE RECORD OF THE 1993 IEEE TORONTO, ONT., CANADA 2-8 OCT. 1993, NEW YORK, NY, USA,IEEE, US, 2 octobre 1993 (1993-10-02), pages 629-636, XP010118698, DOI: 10.1109/IAS.1993.298885 ISBN: 978-0-7803-1462-7**<br>• **TERORDE G ET AL: "Drive dc bus voltage control during power interruptions using kinetic energy recovery", HARMONICS AND QUALITY OF POWER, 2003. 10TH INTERNATIONAL CONFERENCE ON OCT. 6-9, 2003, PISCATAWAY, NJ, USA,IEEE, vol. 1, 6 octobre 2003 (2003-10-06), pages 243-247, XP010650833, ISBN: 978-0-7803-7671-7** |

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

Printed by Jouve, 75001 PARIS (FR)

**Description**

**Domaine technique de l'invention**

La présente invention se rapporte à un procédé de commande mis en oeuvre dans un variateur de vitesse pour contrôler la décélération d'un moteur électrique en cas de coupure d'alimentation électrique. L'invention concerne également un système de commande apte à mettre en oeuvre ledit procédé de commande.

**Etat de la technique**

Le brevet US 4,678,980 décrit une méthode employée dans un variateur de vitesse pour gérer la décélération d'un moteur électrique lorsqu'une coupure d'alimentation intervient. La méthode consiste à sélectionner un profil de fréquence particulier lorsqu'une coupure d'alimentation est détectée en vue de suivre un profil de décélération déterminé, mémorisé dans le variateur de vitesse, ce profil de fréquence particulier étant différent du profil de fréquence employé en fonctionnement normal. Dans ce document, le profil de décélération étant pré-mémorisé dans le variateur de vitesse, il n'est donc pas toujours adapté à l'application dans laquelle le moteur électrique est employé.
D'autres méthodes de commande sont également connues des publications suivantes :

- Raj Narayanan, Don Platt, Sarath Perera :"Improvements to voltage sag ride-through performance of AC variable speed drives"- 21/09/1999, XP002671315

- Holtz J et al : "Controlled AC drives with ride-through capability at power interruption" - 02/10/1993, XP010118698

- Terorde G et al :"Drive DC bus voltage control during power interruptions using kinetic energy recovery" - 06/10/2003, XP010650833

Le but de l'invention est de proposer une méthode de commande dans laquelle il est possible d'adapter la rampe de décélération à l'application, de manière à pouvoir stopper le moteur électrique aussi vite que le permet la mécanique de la machine utilisant le moteur électrique.

**Exposé de l'invention**

Ce but est atteint par un procédé de commande tel que défini dans la revendication 1.
Selon une particularité, les pertes par effet joule sont déterminées par une étape de comparaison effectuant une comparaison entre la tension mesurée sur le bus continu d'alimentation du variateur de vitesse et une valeur de référence.
Selon une autre particularité, la valeur de référence correspond à l'énergie disponible nécessaire pour suivre la rampe de décélération du moteur électrique.
Selon une autre particularité, le procédé comporte une étape d'activation ou de désactivation d'une limitation du couple appliqué au moteur électrique exécutée selon la comparaison effectuée lors de l'étape de comparaison.
L'invention concerne également un variateur de vitesse tel que défini dans la revendication 5.
Selon une particularité, le variateur de vitesse comporte des moyens de comparaison entre la tension mesurée sur le bus continu d'alimentation du variateur de vitesse et une valeur de référence en vue d'en déduire les pertes par effet joule à appliquer au moteur électrique.
Selon une autre particularité, la valeur de référence correspond à l'énergie disponible nécessaire pour suivre la rampe de décélération du moteur électrique.
Selon une autre particularité, le variateur de vitesse comporte des moyens d'activation ou de désactivation d'une limitation du couple appliqué au moteur électrique exécutée selon la comparaison effectuée lors de l'étape de comparaison.

**Brève description des figures**

D'autres caractéristiques et avantages vont apparaître dans la description détaillée qui suit faite en regard des dessins annexés dans lesquels :

- la figure 1 représente un schéma de contrôle employé dans un variateur de vitesse pour la mise en oeuvre du procédé de commande de l'invention,

- les figures 2 et 3 montrent des chronogrammes illustrant la décélération d'un moteur électrique respectivement lors de l'application du procédé de commande de l'invention et lors de l'application d'une méthode standard connue dans l'état de la technique,

- la figure 4 représente, de manière schématique, un variateur de vitesse connecté à un moteur électrique.

**Description détaillée d'au moins un mode de réalisation**

L'invention concerne un procédé de commande mis en oeuvre dans un variateur de vitesse lorsqu'une coupure d'alimentation est détectée.

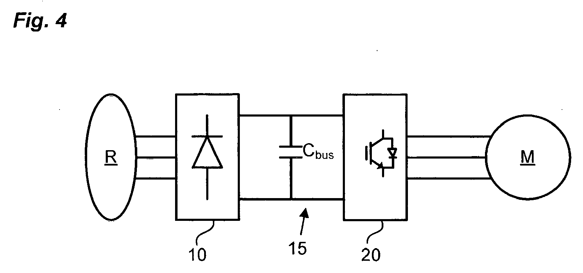

Comme représenté sur la figure 4, un variateur de vitesse destiné à commander un moteur électrique M est connecté en amont, via plusieurs phases d'entrée, à un réseau électrique R et en aval, via plusieurs phases de sortie, au moteur électrique M. Le variateur de vitesse comporte :

- en entrée, un module redresseur 10 composé en règle générale d'un pont de diodes destiné à redresser la tension alternative fournie par le réseau électrique R,

- un bus continu d'alimentation 15 sur lequel est appliquée la tension redressée par le module redresseur, le bus continu d'alimentation étant doté d'un condensateur de bus $C_{bus}$ permettant de maintenir la tension du bus à une valeur constante,

- en sortie, un module onduleur 20 destiné à transformer la tension $V_{bus}$ du bus continu d'alimentation en une tension variable à appliquer au moteur électrique. Le module onduleur comporte plusieurs bras de commutation dotés chacun de plusieurs transistors de puissance commandés chacun à l'ouverture ou à la fermeture pour appliquer une tension variable au moteur électrique M.

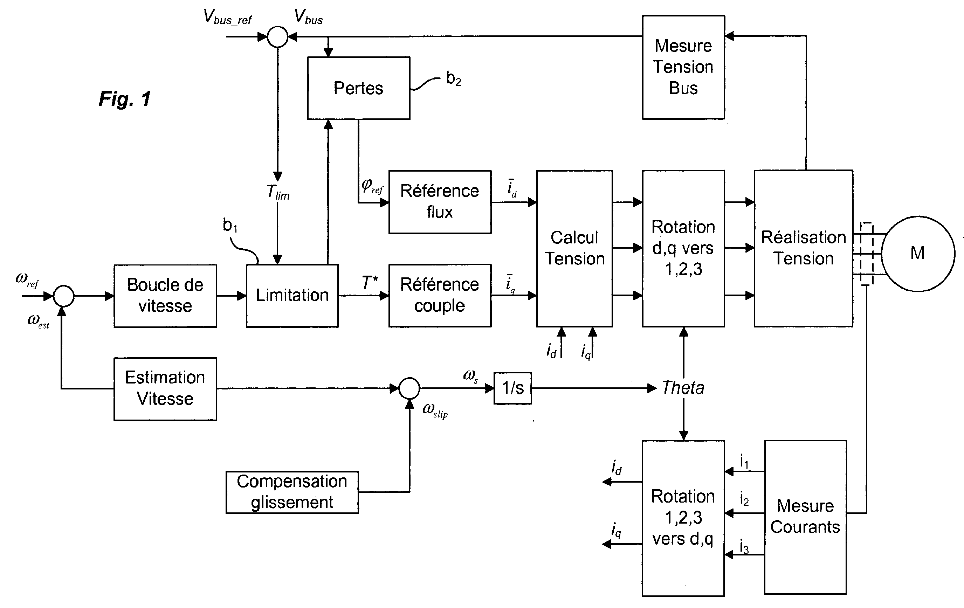

De manière connue, les transistors de puissance sont commandés par une unité de commande exécutant une loi de commande déterminée dans laquelle une tension de commande à appliquer au moteur électrique est déterminée en fonction d'une référence de vitesse $\omega_{ref}$ (désignée également référence de fréquence) et d'une référence de flux $\varphi_{ref}$ (figure 1). La loi de commande peut également intégrer un bloc de contrôle $b_1$ permettant de limiter le couple appliqué au moteur M en fonction de la tension $V_{bus}$ du bus continu d'alimentation. Lorsque la tension $V_{bus}$ du bus continu d'alimentation devient inférieure à une valeur de référence $V_{bus\_ref}$, le module onduleur 20 est commandé en limitation du couple de manière à réguler la tension $V_{bus}$ du bus continu d'alimentation.

Le principe de l'invention est d'adapter cette loi de commande à la gestion de la rampe de décélération du moteur électrique M en cas de coupure d'alimentation électrique, c'est-à-dire lorsque le variateur de vitesse détecte qu'une tension de fonctionnement passe sous une valeur seuil déterminée. La tension de fonctionnement peut être une tension mesurée sur les phases d'entrée, ou la tension du bus continu d'alimentation.

Selon l'invention, la loi de commande intègre un bloc de contrôle $b_2$ des pertes par effet joule subies par le moteur électrique et le variateur de vitesse (désignées ci-après pertes). Le procédé de commande de l'invention consiste donc à gérer les pertes de manière à optimiser l'énergie disponible dans le variateur de vitesse après la coupure d'alimentation en vue de réguler la tension $V_{bus}$ du bus continu d'alimentation à une valeur de référence $V_{bus\_ref}$ adaptée pour respecter la rampe de décélération du  moteur électrique M. Pour gérer les pertes, le procédé de commande de l'invention consiste à modifier la référence de flux $\varphi_{ref}$.

Certains blocs de contrôle représentés sur la figure 1 étant bien connus dans l'état de la technique, ils ne sont pas décrits dans la présente demande de brevet.

La gestion du temps de décélération du moteur électrique M, et donc de sa rampe de décélération par rapport aux pertes s'explique par la démonstration ci-dessous.

L'énergie accumulée au niveau de la tension $V_{bus}$ du bus continu d'alimentation d'un variateur de vitesse commandant un moteur à induction peut s'écrire par la relation suivante :

$$\frac{d}{dt}\left(E_{Bus} + E_{Meca} + E_{Elec}\right) = -P_{Var} - P_{Meca} - P_{Mot} \qquad (1)$$

Dans laquelle :

-

$E_{Bus}$ correspond à l'énergie accumulée dans le bus continu d'alimentation $E_{Bus} = \dfrac{1}{2} \cdot C_{Bus} \cdot V_{Bus}^{2}$ tenant compte de la tension du bus continu d'alimentation $V_{Bus}$ et de la capacité du condensateur de bus $C_{Bus}$,

-

$E_{Meca}$ correspond à l'énergie mécanique générée par le moteur électrique $E_{Meca} = \dfrac{1}{2} \cdot J \cdot \left(\dfrac{\omega}{n_{p}}\right)^{2}$ selon sa vitesse mécanique $\dfrac{\omega}{n_{p}}$ (ratio de la vitesse dans le repère électrique et du nombre de paires de pôles $n_p$) et son inertie J,

- $E_{Elec}$ correspond à l'énergie électrique accumulée par le moteur électrique,

- $P_{Var}$ correspond aux pertes par effet joule subies par le variateur de vitesse,

- $P_{Meca}$ correspond aux pertes mécaniques subies par le moteur dues à l'effet de charge mécanique ou de frottement,

- $P_{Mot}$ correspond aux pertes par effet joule subies par le moteur dues à l'effet électrique.

Or, pour des applications qui sont fortement inertielles et qui possèdent un mode de fonctionnement où la charge est déconnectée, on a :

$$E_{Meca} \gg E_{Bus}, E_{Elec}$$

et

$$P_{Meca} \approx 0$$

Lorsqu'une coupure d'alimentation électrique intervient, il faut conserver suffisamment d'énergie dans le variateur ($E_{Bus}$) pour alimenter le variateur de vitesse. Il est donc nécessaire de réguler l'énergie dans le condensateur de bus $C_{bus}$ (qui n'est alors plus alimenté par le réseau) à une valeur suffisante pour contrôler la décélération du moteur électrique.

En tenant compte de la dynamique « réduite » du système, c'est-à-dire :

$$\frac{d}{dt}\left(E_{Bus} + E_{Meca}\right) = -P_{Var} - P_{Mot} \qquad (2)$$

Avec $E_{Meca} = \dfrac{1}{2} \cdot$ on obtient :

$$\frac{d}{dt}\left(E_{Meca}\right) = C_{Mot} \cdot \left(\frac{\omega}{n_{p}}\right) \qquad (3)$$

Tandis qu'avec $E_{Bus} \approx cste$ la relation (2) devient alors

$$\frac{d}{dt}\left(E_{Meca}\right) = -P_{Var} - P_{Mot} \qquad (4)$$

Dans lesquelles :

-

$C_{Mot}$ représente le couple appliqué par le moteur et est égal à $\quad C_{Mot} = \frac{J}{n_p} \cdot \frac{d}{dt}\omega$ ,

- $J$ représente l'inertie du moteur,
- $\omega$ représente la vitesse du moteur électrique exprimée dans le repère électrique,
- $n_p$ représente le nombre de paires de pôles.

De (3), il vient que pour des pertes nominales, le temps de décélération $t_{dec}$ est fixé par le système variateur de vitesse/Moteur électrique et ne peut pas être modifié pour répondre à un besoin applicatif. Nous obtenons :

$$E_{Meca}(t) = E_{Meca}(Initial) - \left(P_{Var} + P_{Mot}\right) \cdot t$$
$$\Rightarrow t_{dec} = \frac{E_{Meca}(Initial)}{P_{Var} + P_{Mot}}$$

Dans laquelle $t_{dec}$ correspond au temps de décélération du moteur électrique M. Pour augmenter le temps de décélération du moteur électrique M, il convient donc de diminuer les pertes et pour réduire le temps de décélération du moteur électrique, il faut donc augmenter les pertes.

Comme décrit précédemment, pour gérer les pertes, il faut agir sur la référence de flux appliquée dans la loi de commande. Cela s'explique par le raisonnement suivant :

Les pertes sont principalement composées de deux termes, c'est-à-dire des pertes moteur et des pertes variateur. Elles peuvent être réécrites sous la forme de deux fonctions $F_d(i_d)$ et $F_q(i_q)$ dépendant respectivement du courant de flux $i_d$ et du courant de couple iq. Lorsqu'une coupure d'alimentation est détectée, en première approximation, la fonction $F_q(i_q)$ est négligeable devant la fonction $F_d(i_d)$ puisque nous sommes à faible couple de décélération. La fonction $F_d(i_d)$ est monotone en $i_d$, c'est-à-dire que les pertes ne font qu'augmenter quand le courant de flux $i_d$ augmente. Une diminution du courant de flux $i_d$ permet donc de diminuer les pertes. Il en résulte qu'en agissant sur la référence de flux $\varphi_{ref}$, il est possible de contrôler les pertes subies par le moteur électrique M et le variateur de vitesse.

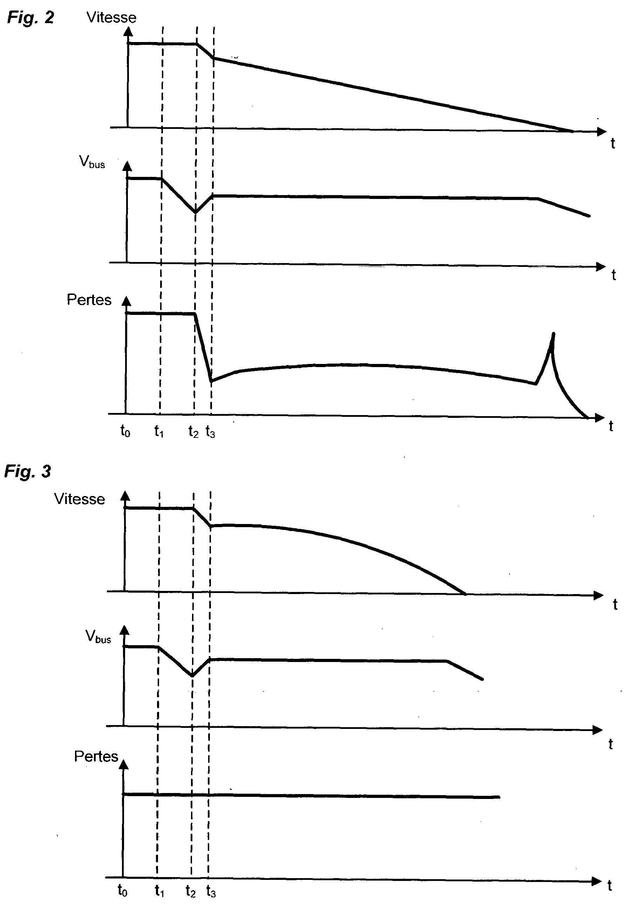

A partir des principes évoqués ci-dessus, il est ainsi possible de proposer un schéma de contrôle particulier tel que représenté sur la figure 2. Ce schéma de contrôle comporte les étapes suivantes :

- Lorsqu'une tension de fonctionnement descend sous un seuil déterminé, synonyme de coupure d'alimentation, une rampe de décélération est appliquée au moteur électrique M par le variateur de vitesse jusqu'à une vitesse nulle.

- Les pertes sont initialisées à une valeur faible, par exemple à une valeur nulle, afin de limiter la chute de la tension.

- La coupure d'alimentation entraîne une baisse de la tension $V_{bus}$ du bus continu d'alimentation, activant sa régulation par limitation du couple appliqué au moteur électrique M. Deux cas peuvent se présenter selon la rampe de décélération appliquée à la référence de vitesse $\omega_{ref}$ :

- Si la rampe de décélération est courte, la tension $V_{bus}$ du bus continu d'alimentation a tendance à augmenter. Il faut alors

    - augmenter les pertes subies par le moteur M et le variateur de vitesse pour suivre la rampe de décélération,

    - ou alternativement ralentir la rampe de décélération.

- Si la rampe de décélération est longue, la tension $V_{bus}$ du bus continu d'alimentation a tendance à chuter. Il faut alors :

  - diminuer les pertes subies par le moteur M et le variateur de vitesse pour suivre la rampe de décélération,

  - ou alternativement accélérer la rampe de décélération.

Pour répondre à ces deux cas, il est nécessaire de réguler la tension $V_{bus}$ du bus continu d'alimentation par rapport à une valeur de référence $V_{bus\_ref}$ de tension du bus. La régulation se produit comme suit :

- Si la tension $V_{bus}$ du bus continu d'alimentation est supérieure à la valeur de référence $V_{bus\_ref}$ de tension du bus, la limitation du couple diminue jusqu'à atteindre une valeur nulle. Le couple moteur est calculé pour suivre la rampe de décélération. Si la rampe de décélération est courte, il y a un fort appel de couple. Celui-ci est alors limité à la valeur de limitation, à moins d'augmenter les pertes. Si la rampe est longue, la tension $V_{bus}$ du bus continu d'alimentation baissera naturellement à moins de diminuer les pertes.

- Si la tension $V_{bus}$ du bus continu d'alimentation est inférieure à la valeur de référence $V_{bus\_ref}$ de tension du bus, la limitation du couple remonte jusqu'à sa valeur nominale. Le couple moteur est calculé pour suivre la rampe de décélération. Si la rampe de décélération est courte, il y a un fort appel de couple. La tension $V_{bus}$ du bus continu d'alimentation augmentera naturellement à moins d'augmenter les pertes. Si la rampe est longue, le couple peut naturellement ré-augmenter jusqu'à la limitation afin de ré-augmenter la tension $V_{bus}$ du bus continu d'alimentation, à moins de diminuer les pertes.

Selon l'état de la limitation de couple, le procédé de commande de l'invention contrôle les pertes pour réguler la tension $V_{bus}$ du bus continu d'alimentation à la valeur de référence $V_{bus\_ref}$ et ainsi adapter la rampe de décélération du moteur électrique M. Cela se produit de la manière suivante :

- Si la limitation de couple est active, le module onduleur 20 est commandé pour augmenter les pertes afin de suivre la rampe de décélération,

- Si la limitation de couple est inactive (le couple est alors faible et n'a pas besoin d'être limité), le module onduleur 20 est commandé pour diminuer les pertes afin de suivre la rampe de décélération.

La référence de flux $\varphi_{ref}$ est ensuite ajustée dans le sens d'augmentation ou de diminution des pertes à appliquer au moteur électrique M.

Les figures 2 et 3 montrent des chronogrammes illustrant la décélération d'un moteur électrique respectivement lorsque le procédé de commande de l'invention est employé dans le variateur de vitesse ou lorsqu'une méthode standard connue dans l'état de la technique est employée dans le variateur de vitesse.

Sur ces figures, les chronogrammes montrent chacun la courbe de vitesse du moteur électrique M, la variation de la tension du bus continu d'alimentation $V_{bus}$ et la variation des pertes.

Sur la figure 2, pour le procédé de commande de l'invention, la séquence est la suivante :

Entre $t_0$ et $t_1$, le moteur électrique tourne à une vitesse constante, la tension $V_{bus}$ du bus continu d'alimentation est constante et les pertes sont également constantes.

A $t_1$, une coupure d'alimentation intervient.

Entre $t_1$ et $t_2$, la vitesse du moteur électrique M reste constante mais la tension $V_{bus}$ du bus continu d'alimentation décroît jusqu'à une valeur inférieure à la valeur de référence $V_{bus\_ref}$ de tension du bus. Les pertes restent constantes.

A $t_2$, le variateur de vitesse détecte la coupure d'alimentation.

Entre $t_2$ et $t_3$, la décélération du moteur électrique M entraîne une augmentation de la tension $V_{bus}$ du bus continu d'alimentation. Selon la valeur de la tension $V_{bus}$ du bus continu d'alimentation par rapport à la valeur de référence $V_{bus\_ref}$, le procédé de commande consiste à gérer les pertes appliquées au moteur électrique en vue d'optimiser l'énergie disponible pour suivre la rampe de décélération du moteur électrique. La gestion des pertes est réalisée en ajustant le flux de référence.

A partir de $t_3$, la tension du bus continu d'alimentation est régulée à la valeur de référence permettant de suivre la rampe de décélération du moteur électrique.

Sur la figure 3, la décélération du moteur électrique est réalisée en l'absence du bloc de contrôle $b_2$ des pertes.

Les pertes restent donc constantes en permanence, quelle que soit la valeur de la tension $V_{bus}$ du bus continu d'alimentation. La rampe de décélération suivie par le moteur ne peut donc pas respecter la mécanique de la machine.

**Revendications**

1. Procédé de commande mis en oeuvre dans un variateur de vitesse pour contrôler la décélération d'un moteur électrique (M) en cas de coupure d'alimentation électrique, ledit variateur de vitesse comportant notamment un bus continu d'alimentation (15) sur lequel est appliquée une tension, ledit bus continu d'alimentation (15) étant connecté à un module onduleur (20), ledit module onduleur (20) étant connecté au moteur électrique (M) et commandé selon une loi de commande dans laquelle une tension de commande à appliquer au moteur électrique (M) est déterminée à partir d'une référence de flux ($\varphi_{ref}$) et d'une référence de vitesse *($\omega_{ref}$)*, **caractérisé en ce que** le procédé de commande comporte :

   - une étape de détermination des pertes par effet joule subies par le moteur électrique (M) et le variateur de vitesse selon une rampe de décélération à appliquer au moteur électrique (M) lors d'une coupure d'alimentation électrique,
   - une étape de détermination de la référence de flux ($\varphi_{ref}$) en fonction desdites pertes par effet joule subies par le moteur électrique (M) et le variateur de vitesse,
   - une étape de modification de la référence de flux pour gérer les pertes par effet joule de manière à optimiser l'énergie disponible dans le variateur de vitesse après la coupure d'alimentation en vue de réguler la tension ($V_{bus}$) du bus continu d'alimentation à une valeur de référence ($V_{bus\_ref}$) adaptée pour respecter la rampe de décélération du moteur électrique (M).

2. Procédé de commande selon la revendication 1, **caractérisé en ce que** les pertes par effet joule sont déterminées par une étape de comparaison effectuant une comparaison entre la tension ($V_{bus}$) mesurée sur le bus continu d'alimentation du variateur de vitesse et une valeur de référence ($V_{bus\_ref}$).

3. Procédé de commande selon la revendication 2, **caractérisé en ce que** la valeur de référence ($V_{bus\_ref}$) correspond à l'énergie disponible nécessaire pour suivre la rampe de décélération du moteur électrique (M).

4. Procédé de commande selon la revendication 2 ou 3, **caractérisé en ce** qu'il comporte une étape d'activation ou de désactivation d'une limitation du couple appliqué au moteur électrique (M) exécutée selon la comparaison effectuée lors de l'étape de comparaison.

5. Variateur de vitesse destiné à contrôler la décélération d'un moteur électrique (M) en cas de coupure d'alimentation électrique, ledit variateur de vitesse comportant notamment un bus continu d'alimentation (15) sur lequel est appliquée une tension ($V_{bus}$), ledit bus continu d'alimentation (15) étant connecté à un module onduleur (20), ledit module onduleur (20) étant connecté au moteur électrique (M) et commandé selon une loi de commande dans laquelle une tension de commande à appliquer au moteur électrique (M) est déterminée à partir d'une référence de flux ($\varphi_{ref}$) et d'une référence de vitesse *($\omega_{ref}$)*, **caractérisé en ce que** le variateur de vitesse comporte :

   - des moyens de détermination des pertes par effet joule subies par le moteur électrique (M) et le variateur de vitesse selon une rampe de décélération à appliquer au moteur électrique (M) lors d'une coupure d'alimentation électrique,
   - des moyens de détermination de la référence de flux ($\varphi_{ref}$) en fonction desdites pertes par effet joule subies par le moteur électrique (M) et le variateur de vitesse,
   - des moyens de modification de la référence de flux pour gérer les pertes par effet joule de manière à optimiser l'énergie disponible dans le variateur de vitesse après la coupure d'alimentation en vue de réguler la tension *($V_{bus}$)* du bus continu d'alimentation à une valeur de référence *($V_{bus\_ref}$)* adaptée pour respecter la rampe de décélération du moteur électrique (M).

6. Variateur de vitesse selon la revendication 5, **caractérisé en ce qu'**il comporte des moyens de comparaison entre la tension ($V_{bus}$) mesurée sur le bus continu d'alimentation du variateur de vitesse et une valeur de référence ($V_{bus\_ref}$) en vue d'en déduire les pertes par effet joule à appliquer au moteur électrique (M).

7. Variateur de vitesse selon la revendication 6, **caractérisé en ce que** la valeur de référence ($V_{bus\_ref}$) correspond à l'énergie disponible nécessaire pour suivre la rampe de décélération du moteur électrique (M).

8. Variateur de vitesse selon la revendication 6 ou 7, **caractérisé en ce qu'**il comporte des moyens d'activation ou de désactivation d'une limitation du couple  appliqué au moteur électrique (M) exécutée selon la comparaison effectuée lors de l'étape de comparaison.

**Patentansprüche**

1. Steuerverfahren, das bei einem Geschwindigkeitsregler angewendet wird, um die Verzögerung eines Elektromotors (M) im Fall der Unterbrechung der Stromversorgung zu regeln, wobei der Geschwindigkeitsregler insbesondere einen Gleichstromversorgungsbus (15) aufweist, an den eine Spannung angelegt wird, wobei der Gleichstromversorgungsbus (15) mit einem Wechselrichtermodul (20) verbunden ist, wobei das Wechselrichtermodul (20) mit dem Elektromotor (M) verbunden ist und gemäß einem Steuergesetz gesteuert wird, bei dem eine an den Elektromotor (M) anzulegende Steuerspannung ausgehend von einem Flussrichtwert ($\varphi_{ref}$) und einem Geschwindigkeitsrichtwert ($\omega_{ref}$) festgelegt wird, **dadurch gekennzeichnet, dass** das Steuerverfahren aufweist:

   - einen Schritt der Feststellung der vom Elektromotor (M) und vom Geschwindigkeitsregler erfahrenen Wärmeverluste gemäß einer Verzögerungsrampe, die an den Elektromotor (M) bei einer Unterbrechung der Stromversorgung anzulegen ist,
   - einen Schritt der Feststellung des Flussrichtwerts ($\varphi_{ref}$) abhängig von den Wärmeverlusten, die vom Elektromotor (M) und vom Geschwindigkeitsregler erfahren werden,
   - einen Schritt der Änderung des Flussrichtwerts, um die Wärmeverluste so zu verwalten, dass die im Geschwindigkeitsregler nach der Stromunterbrechung verfügbare Energie optimiert wird, um die Spannung ($V_{bus}$) des Gleichstromversorgungsbusses auf einen Bezugswert ($V_{bus\_ref}$) zu regeln, der geeignet ist, um die Verzögerungsrampe des Elektromotors (M) einzuhalten.

2. Steuerverfahren nach Anspruch 1, **dadurch gekennzeichnet, dass** die Wärmeverluste durch einen Vergleichsschritt festgelegt werden, der einen Vergleich zwischen der am Gleichstromversorgungsbus des Geschwindigkeitsreglers gemessenen Spannung ($V_{bus}$) und einem Bezugswert ($V_{bus\_ref}$) durchführt.

3. Steuerverfahren nach Anspruch 2, **dadurch gekennzeichnet, dass** der Bezugswert ($V_{bus\_ref}$) der verfügbaren Energie entspricht, die notwendig ist, um der Verzögerungsrampe des Elektromotors (M) zu folgen.

4. Steuerverfahren nach Anspruch 2 oder 3, **dadurch gekennzeichnet, dass** es einen Schritt der Aktivierung oder Deaktivierung einer Begrenzung des an den Elektromotor (M) angewendeten Drehmoments aufweist, die gemäß dem im Vergleichsschritt ausgeführten Vergleich ausgeführt wird.

5. Geschwindigkeitsregler, der dazu bestimmt ist, die Verzögerung eines Elektromotors (M) im Fall einer Unterbrechung der Stromversorgung zu regeln, wobei der Geschwindigkeitsregler insbesondere einen Gleichstromversorgungsbus (15) aufweist, an den einen Spannung ($V_{bus}$) angelegt wird, wobei der Gleichstromversorgungsbus (15) mit einem Wechselrichtermodul (20) verbunden ist, wobei das Wechselrichtermodul (20) mit dem Elektromotor (M) verbunden ist und gemäß einem Steuergesetz gesteuert wird, bei dem eine an den Elektromotor (M) anzulegende Steuerspannung ausgehend von einem Flussrichtwert ($\varphi_{ref}$) und von einem Geschwindigkeitsrichtwert ($\omega_{ref}$) festgelegt wird, **dadurch gekennzeichnet, dass** der Geschwindigkeitsregler aufweist:

   - Einrichtungen zur Festlegung der vom Elektromotor (M) und vom Geschwindigkeitsregler erfahrenen Wärmeverluste gemäß einer Verzögerungsrampe, die an den Elektromotor (M) bei einer Unterbrechung der Stromversorgung anzulegen ist,
   - Einrichtungen zur Festlegung des Flussrichtwerts ($\varphi_{ref}$) abhängig von den vom Elektromotor (M) und vom Geschwindigkeitsregler erfahrenen Wärmeverlusten,
   - Einrichtungen zur Änderung des Flussrichtwerts, um die Wärmeverluste so zu verwalten, dass die im Geschwindigkeitsregler nach der Versorgungsunterbrechung verfügbare Energie optimiert wird, um die Spannung ($V_{bus}$) des Gleichstromversorgungsbusses auf einen Bezugswert ($V_{bus\_ref}$) zu regeln, der geeignet ist, um die Verzögerungsrampe des Elektromotors (M) einzuhalten.

6. Geschwindigkeitsregler nach Anspruch 5, **dadurch gekennzeichnet, dass** er Einrichtungen zum Vergleich zwischen der am Gleichstromversorgungsbus des Geschwindigkeitsreglers gemessenen Spannung ($V_{bus}$) und einem Bezugswert ($V_{bus\_ref}$) aufweist, um daraus die an den Elektromotor (M) anzulegenden Wärmeverluste abzuleiten.

7. Geschwindigkeitsregler nach Anspruch 6, **dadurch gekennzeichnet, dass** der Bezugswert ($V_{bus\_ref}$) der verfügbaren Energie entspricht, die notwendig ist, um der Verzögerungsrampe des Elektromotors (M) zu folgen.

8. Geschwindigkeitsregler nach Anspruch 6 oder 7, **dadurch gekennzeichnet, dass** er Einrichtungen zur Aktivierung oder Deaktivierung einer Begrenzung des an den Elektromotor (M) angelegten Drehmoments aufweist, die gemäß dem im Vergleichsschritt ausgeführten Vergleich ausgeführt wird.

**Claims**

1. Method of control implemented in a variable speed drive for controlling the deceleration of an electric motor (M) in the case of electrical power outage, the said variable speed drive comprising in particular a DC power supply bus (15) to which is applied a voltage, the said DC power supply bus (15) being connected to an inverter module (20), the said inverter module (20) being connected to the electric motor (M) and controlled according to a control law in which a control voltage to be applied to the electric motor (M) is determined on the basis of a flux reference ($\varphi_{ref}$) and of a speed reference ($\omega_{ref}$), **characterized in that** the method of control comprises:

   - a step of determining the Joule-effect losses undergone by the electric motor (M) and the variable speed drive, according to a deceleration ramp to be applied to the electric motor (M) during an electrical power outage,
   - a step of determining the flux reference ($\varphi_{ref}$) as a function of the said Joule-effect losses undergone by the electric motor (M) and the variable speed drive,
   - a step of modifying the flux reference to manage the Joule-effect losses so as to optimize the energy available in the variable speed drive after the power outage with a view to regulating the voltage ($V_{bus}$) of the DC power supply bus to a reference value ($V_{bus\_ref}$) adapted so as to comply with the deceleration ramp for the electric motor (M).

2. Method of control according to Claim 1, **characterized in that** the Joule-effect losses are determined by a comparison step performing a comparison between the voltage ($V_{bus}$) measured on the DC power supply bus of the variable speed drive and a reference value ($V_{bus\_ref}$).

3. Method of control according to Claim 2, **characterized in that** the reference value ($V_{bus\_ref}$) corresponds to the available energy required to follow the deceleration ramp for the electric motor (M).

4. Method of control according to Claim 2 or 3, **characterized in that** it comprises a step of activating or deactivating a limitation of the torque applied to the electric motor (M), executed according to the comparison performed during the comparison step.

5. Variable speed drive intended to control the deceleration of an electric motor (M) in the case of electrical power outage, the said variable speed drive comprising in particular a DC power supply bus (15) to which is applied a voltage ($V_{bus}$), the said DC power supply bus (15) being connected to an inverter module (20), the said inverter module (20) being connected to the electric motor (M) and controlled according to a control law in which a control voltage to be applied to the electric motor (M) is determined on the basis of a flux reference ($\varphi_{ref}$) and of a speed reference ($\omega_{ref}$), **characterized in that** the variable speed drive comprises:

   - means for determining the Joule-effect losses undergone by the electric motor (M) and the variable speed drive according to a deceleration ramp to be applied to the electric motor (M) during an electrical power outage,
   - means for determining the flux reference ($\varphi_{ref}$) as a function of the said Joule-effect losses to be applied to the electric motor (M) and to the variable speed drive,
   - means for modifying the flux reference to manage the Joule-effect losses so as to optimize the energy available in the variable speed drive after the power outage with a view to regulating the voltage ($V_{bus}$) of the DC power supply bus to a reference value ($V_{bus\_ref}$) adapted so as to comply with the deceleration ramp for the electric motor (M).

6. Variable speed drive according to Claim 5, **characterized in that** it comprises comparison means for comparing between the voltage ($V_{bus}$) measured on the DC power supply bus of the variable speed drive and a reference value ($V_{bus\_ref}$) with a view to deducing therefrom the Joule-effect losses to be applied to the electric motor (M).

7. Variable speed drive according to Claim 6, **characterized in that** the reference value ($V_{bus\_ref}$) corresponds to the available energy required to follow the deceleration ramp for the electric motor (M).

8. Variable speed drive according to Claim 6 or 7, **characterized in that** it comprises means for activating or deactivating a limitation of the torque applied to the electric motor (M), executed according to the comparison performed during the comparison step.

Fig. 1

EP 2 546 977 B1

**Fig. 2**

**Fig. 3**

*Fig. 4*

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4678980 A

**Littérature non-brevet citée dans la description**

- **RAJ NARAYANAN ; DON PLATT ; SARATH PERERA.** *Improvements to voltage sag ride-through performance of AC variable speed drives,* 21 Septembre 1999

- **HOLTZ J et al.** *Controlled AC drives with ride-through capability at power interruption,* 02 Octobre 1993
- **TERORDE G et al.** *Drive DC bus voltage control during power interruptions using kinetic energy recovery,* 06 Octobre 2003